Europäisches Patentamt

European Patent Office

Office européen des brevets

(11) Veröffentlichungsnummer: **0 369 093**
**A2**

## (12) EUROPÄISCHE PATENTANMELDUNG

(21) Anmeldenummer: **89102643.7**

(22) Anmeldetag: **16.02.89**

(51) Int. Cl.5: **A23L 1/064, A23L 1/05**

(30) Priorität: **11.11.88 DE 3838366**

(43) Veröffentlichungstag der Anmeldung:
**23.05.90 Patentblatt 90/21**

(84) Benannte Vertragsstaaten:
**AT BE CH DE ES FR GB GR IT LI LU NL SE**

(71) Anmelder: **Oelsner, Manfred**
**Bleicherstrasse 71**
**D-2000 Hamburg 50(DE)**

(72) Erfinder: **Oelsner, Manfred**
**Bleicherstrasse 71**
**D-2000 Hamburg 50(DE)**

(74) Vertreter: **Richter, Werdermann & Gerbaulet**
**Neuer Wall 10**
**D-2000 Hamburg 36(DE)**

(54) **Verfahren zur Herstellung von pektin- und zuckerhaltigen Zubereitungen.**

(57) Für die Herstellung von Konfitüren und Marmeladen werden Trocken-Pektine verwandt, die in einem geschlossenen System durch Wärmezufuhr bei gleichzeitiger äußerer Druckluftzufuhr oder unter Ausschluß einer äußeren Druckluftzufuhr bei einem hohen oder niederen Fruchtanteil in Anwesenheit einer Menge an kristallinem Zucker oder unter Ausschluß einer Menge an kristallinem Zucker in Lösung bei Temperaturen unterhalb oder oberhalb von 100° C gebracht werden.

EP 0 369 093 A2

## Verfahren zur Herstellung von pektin- und zuckerhaltigen Zubereitungen

Die Erfindung betrifft ein Verfahren zur Herstellung von, pektin- und zuckerhaltigen Zubereitungen, insbesondere aus frischen oder frisch erhaltenen entkernten oder entsteinten Früchten, Obstfruchtfleisch, Obstpulpe oder Obstmark,wie Marmelade, Konfitüre u.dgl..

Das Einkochen von Konfitüren, Gelees und Marmeladen aus Frucht, Zucker, Pektin und Genußsäure ist bekannt. Aroma, Farbe und Konsistenz sowie die Erhaltung und Verteilung der Früchte bestimmen im wesentlichen die Qualitätsmerkmale von Konfitüren, Gelees und Marmeladen. Diese Eigenschaften sind jedoch in starkem Maße von jeweils eingesetzten Rohstoffen abhängig. Der Zusatz von Zuckerstoffen, Pektin und Genußsäure gibt dem Fertigprodukt seine charakteristische Eigenart. Für die Herstellung von Konfitüren und Marmeladen wird Steinobst, Kernobst und Beerenobst in geeignetem Zustand verwendet. Zur Konfitürenherstellung kommt vorwiegend Raffinade oder Weißzucker in Form von Zuckerlösungen, die sich durch relativ niedrige Viskosität auszeichnen, zur Anwendung; sie sind temperaturtolerant und kristallisieren auch bei niedriger Temperatur nicht aus. Neben Zucker wird zur Herstellung von Konfitüren und Marmeladen Glukosesirup sowie ferner Pektin und Genußsäure eingesetzt, wobei insbesondere in den Mehrkomponentensystemen von Konfitüre und Marmelade das Pektin die strukturgebende Rolle spielt und in der jeweils notwendigen Menge für die Gelierung eingesetzt wird. Als Genußsäuren werden u.a. Milchsäure, Citronensäure, Weinsäure u.dgl. verwendet, die zur Einstellung des jeweils günstigen pH-Wertes dienen, zumal der günstigste pH-Wert zur Gelbildung bei 3,0 liegt. Die Einstellung des für den Gelierungsvorganges optimalen pH-Wertes bei der Konfitüren- und Marmeladenherstellung erfolgt eben durch Zugabe dieser Genußsäure.

Marmeladen und Konfitüren werden im Kochverfahren hergestellt, durch das ein ausreichender Zuckeraustausch zwischen dem flüssigen Medium und der Frucht erzielt wird, um ein Auswässern im Fertigprodukt während der Lagerung zu verhindern. Zur industriellen Herstellung von Konfitüren und Marmeladen sind die verschiedensten Kochkessel entwickelt worden, wobei jedoch vom Einkochprinzip zwei Arten unterschieden werden, nämlich das Kochen im offenen Kessel unter Atmosphärendruck und das Kochen im geschlossenen Vakuumkessel bei Unterdruck. Das Herstellen von Marmeladen und Konfitüren im offenen Kessel wird nur noch in wenigen, oft kleinen Herstellerbetrieben durchgeführt Beim erstgenannten Verfahren wird zunächst nur die Frucht und die Pektin-Zuckermischung auf 80°C bis 90°C erhitzt und bei dieser Temperatur etwa 5 bis 10 Minuten erhitzt. Die Pektine gehen in Lösung. Ziel des Verfahrens ist es, die Trockenpektine zu lösen und den Lösungsvorgang bei niedrigeren Temperaturen durchzuführen, um die Früchte zu schonen. Alternativ wird das Lösen der Pektine aber auch durch kurzes Aufkochen, etwa 2 Minuten bei 100°C bis 102°C, durchgeführt. Beide Maßnahmen haben jedoch zur Folge, daß die unvermeidliche und auch bezweckte Wasserdampfung das Aroma schädigt.

Das Aroma wird aber umso mehr geschützt, wenn die Erhitzung und Verdampfung bei hohen Zuckerkonzentrationen vorgenommen wird, denn Zucker bindet das Aroma.

Bei der vorgenannten, bekannten Verfahrensweise ist jedoch das Aroma "ungeschützt" der Erhitzung und Verdampfung ausgesetzt. Dagegen hat sich das Einkochen im geschlossenen Vakuumkessel bei Unterdruck durchgesetzt. Beim zweitgenannten Kochverfahren werden zunächst die Früchte und der zugesetzte Zucker auf 70°C bis 80°C aufgeheizt und vermittels geeigneter Rührwerke durchmischt Die vorgewärmte Frucht-Zuckermischung wird dann vom Vorwärmer durch Vakuum in den eigentlichen Kochkessel eingesogen und unter Dampfzufuhr und Rühren im Vakuum eingedampft. Es wird dann die Pektinlösung zudosiert und im Vakuum bis zum Erreichen der gewünschten Endtrockenmasse weiter eingedampft; es erfolgt dann bei Erreichen der Endtrockenmasse die Zudosierung der Säure, wobei dann ein Abfüllen des Fertigproduktes bei etwa 75°C bis 85°C erfolgt. Beim Vakuumkochverfahren wird jedoch das Kochen in geschlossenen Kochkesseln unter vermindertem Druck durchgeführt. Bei diesem Verfahren wird mit niedrigen Kochtemperaturen und kurzen Kochzeiten gearbeitet, wodurch sich eine hohe Wirtschaftlichkeit des Verfahrens ergeben soll. Auch bei diesem Verfahren wird mit einem Vorwärmer gearbeitet, der dem eigentlichen Vakuumkessel vorgeschaltet ist. Der technische Aufwand derartiger Vakuum-Kochanlagen ist relativ groß. Alle Zusätze werden in flüssiger Form der Frucht dabei zugegeben.

Da bei dem bekannten Vakuum-Verfahren zur Herstellung von Konfitüren und Marmeladen Pektine in gequollenem Zustand oder in gelöster Form sowie auch die Genußsäure in Form einer Lösung zugegeben werden, gehen alle diese Lösungen in das Gesamtprodukt ein. Das Ergebnis ist letztlich ein hoher Wassergehalt und die hohen Wasseranteile müssen verdampft werden. Vorteilhaft ist bei dem Einkochverfahren im Vakuumkessel, daß bei Temperaturen um etwa 70°C erhitzt wird, wohingegen jedoch in Kauf genommen werden muß, daß eine Aromaverdampfung erfolgt, mit der Folge, daß ein Endprodukt mit geringem Aromengehalt erhalten wird. Es sind daher auch Kochanlagen mit Aromenrückgewinnung bekannt, bei denen aus den Brüden die flüchtigen Aromenanteile kondensiert und dem Kochgut vor dem Ablassen des Ansatzes wieder zugesetzt werden. Derartige Kochanlagen sind jedoch sehr aufwendig. Hinzu kommt, daß die Qualität des Endproduktes abnimmt, je weniger Zucker bei der Kochung selbst im Produkt vorhanden ist. Auch bei der Vakuum-Kochung wurde er kannt, daß der gesamte Zucker für die Erhaltung des Aromas vorteilhaft ist. Deshalb wird bei niedriger Temperatur gekocht, was aber wiederum dazu führt, daß auch hier Aromaverluste auftreten.

Der Erfindung liegt die Aufgabe zugrunde, ein Verfahren zu schaffen, mit dem es möglich ist, Trocken-Pektine unter den verschiedensten Bedingungen, wie bei einem hohen Zuckergehalt, bei ausschließlicher Anwesenheit von Frucht, einer zusätzlichen Druckzufuhr oder unter Ausschluß eines zusätzlichen äußeren Druckes bei Temperaturen unter oder über 100° C, derart in Lösung zu bringen, daß quasi ungekochte Marmeladen und Konfitüren mit einer mehrjährigen Lagerung ohne Schimmelbildung und guter Aromahaltung herstellbar sind, wobei auch stückige Frucht zur Herstellung verwendbar ist.

Diese Aufgabe wird bei einem Verfahren gemäß der eingangs genannten Art durch die im Patentanspruch 1 gekennzeichneten Merkmale gelöst.

Des weiteren wird diese Aufgabe durch die in den weiteren Patentansprüchen angegebenen Verfahrensweisen gelöst.

Besonders vorteilhaft ist, daß auch bei einem Nullgehalt an Zucker die Trocken-Pektine einbringbar und in einem geschlossenen Kochkessel erhitzbar sind. Das Lösen der Trocken-Pektine erfolgt z.B. schon unterhalb 0,3 bar bei Temperaturen zwischen 40° bis 50° C. Die Trocken-Pektine werden so in Lösung gebracht, ohne daß dabei das Aroma geschädigt wird. Dabei ist wesentlich, daß die Lösung der Trocken-Pektine unter Vermeidung von Wasserdampfverlusten durchführbar ist, was nur in einem geschlossenen System möglich ist. Neben der Einleitung von Druckluft und einem Überdruck von 0,6 bis 0,8 bar ist es auch möglich, keine äußere Druckzufuhr für einen Überdruck von 0,6 bis 0,8 bar anzuwenden, wenn die Temperatur bis etwa 95° C gesteigert wird.

Ein höherer Druck kann auch durch eine Temperatursteigerung erzielt werden.

Trocken-Pektine sind somit auch bei hohen Zuckergehalten lösbar, z.B. durch Zurücknahme des Fruchtanteils, und zwar mit oder ohne Druckzufuhr. Ein Zuckerausgleich bei gleichzeitiger Aromaerhaltung war mit den bekannten Verfahren bisher nicht verwirklichbar. Einer nachträglichen Zugabe von passierten Früchten steht nichts entgegen.

Es ist somit auch möglich, daß ein Teil der Früchte bei hohen Zuckeranteilen, z.B. zwischen 70% und 80%, mit Druck in Temperaturbereichen unter 100° C oder über 100° C erhitzt wird. Die gesetzlich vorgeschriebenen Fruchtanteile werden danach passiert zugefügt und mit den Trocken-Pektinen zusammen noch einmal druckbehandelt.

Nach dem Verfahren gemäß Anspruch 2 wird der Zucker in zwei Stufen der Frucht zugegeben, und zwar einmal zu Beginn des Verfahrens und dann nach erfolgter Zugabe des Pektins, wobei in den beiden Stufen der Hauptanteil der jeweils eingesetzten Zuckermenge zugegeben wird, wohingegen nach dem zweiten Verfahren bereits zu Beginn der gesamte Zucker zugesetzt wird. Zum Einsatz gelangen keine Zuckerlösungen, sondern ausschließlich kristalliner Zucker. Das Pektin wird als Trockenpektin eingesetzt und auch die Genußsäuren werden in kristalliner Form zugesetzt, so daß keine zusätzlichen Wasseranteile hinzukommen und der gesamte Wasseranteil durch den Wasseranteil der Frucht vorgegeben ist. Besonders vorteilhaft ist bei diesem Verfahren, daß vor der Druckstufe bereits ein hoher Mehrgehalt an Zucker oder der gesamte Zucker der Frucht zugesetzt wird. Je mehr Zucker sich in der Druckstufe befindet, desto besser ist das Endprodukt. Überraschenderweise hat es sich gezeigt, daß die Trockenpektine, die zum Einsatz gelangen, in der Druckstufe völlig gelöst werden. Selbst dies wird auch dann erreicht, wenn der gesamte Zucker vor der Druckstufe zugesetzt worden ist und die Trockenmasse des Endproduktes eingestellt ist. Die Druckstufe eignet sich besonders gut zum Ausgleich der niedrigen Zuckerkonzentration in der Frucht und der höheren Zuckerkonzentration in der Umgebung der Früchte. Durch diese Maßnahme wird das Aufschwimmen der Früchte im Endprodukt vermieden. Die bessere und schnellere Lösung der Pektine wird mit dem Mehrstufenverfahren erzielt. Wesentlich ist, daß bei den Verfahren nach Anspruch 2 und Anspruch 4 in der Druckstufe die bisher "vorbehandelten" Pektine völlig gelöst werden. Mit den Verfahren ist es somit möglich, Trockenpektine einsetzen zu können und deren vollständige Lösung in der Druckstufe zu erreichen. Gerade durch den hohen Zuckeranteil hat sich berraschenderweise eine Qualitätssteigerung des Endproduktes mit hohem Aromagehalt ergeben. Gegenüber den bekannten Verfahren wird auch bei den erfindungsgemäßen Verfahren verdampft und erhitzt, aber bei einer hohen Zuckerkonzentration. Außerdem werden die Pektine bei höherer Temperatur gelöst, ohne Vorhandensein von Wasser. Trockenpektine sind hiernach bei hohen Zuckerkonzentrationen in Lösung bringbar. Der Aromengehalt wird dabei erhöht. So sind u.a. nach dem erfindungsgemäßen Verfahren backfeste Konfitüren und Konfitüren für Joghurt-Frucht-Zubereitungen herstellbar. Das Verfahren kann überall dort eingesetzt werden, wo Trockenpektine bei hohem Zuckergehalt in Lösung gebracht werden sollen. So u.a. auch dort, wo Gallerten aus Pektin in Gegenwart von Zucker hergestellt werden, wie den Agar-Agar-Süßwaren gleiche Pektin-Erzeugnisse, bei denen anstelle von Agar-Agar als Geliermittel Pektin eingesetzt wird. Beide Verfahren nach Anspruch 2 und Anspruch 4 führen zu Endprodukten mit einem sehr hohen Aromengehalt.

Bei dem dritten Verfahren nach Anspruch 6 wird in der ersten Kochphase der eingesetzten Fruchtmenge eine Mischung aus Trocken-Pektin und kristallinem Zucker zugegeben, wobei nur ein ganz kleiner Prozentsatz an Zucker der eingesetzten Gesamtmenge an Zucker zunächst eingesetzt wird. Durch das anschließende Erhitzen im geschlossenen Kochkessel wird erreicht, daß das Trocken-Pektin auch bei Einsatz einer geringen Menge an Zucker vollständig in Lösung geht. Die dann nachfolgende Zugabe der restlichen Zuckermenge hält das Aroma. Ein geringfügiger Aromenverlust bei diesem Verfahren kann durch Aromenzugabe ausgeglichen werden. Aus aufgegangenen und konzentrierten Brüdendämpfen kann das so erhaltene Aroma eingesetzt werden.

Des weiteren ist es möglich, anstelle eines Lösens der Trocken-Pektine bei einem hohen Zuckergehalt bei einer oberhalb 100°C liegenden Temperatur im geschlossenen Kochkessel unter Druck das Lösen der Trocken-Pektine bei einer unterhalb der Temperatur von 100°C liegenden Temperatur insbesondere vermittels eines durch Zuleiten eines neutralen Gases, wie z.B. Kohlendioxid-Gas, erzeugten zusätzlichen Druckes vorzunehmen.

Vorteilhafte Ausgestaltungen der Erfindung sind in den Unteransprüchen gekennzeichnet.

Das erfindungsgemäße Verfahren wird anhand der nachfolgenden Beispiele bei der Herstellung von Marmelade näher erläutert.


## Beispiel 1

Ausgegangen wird von frischen oder frischerhaltenen, ent kernten oder entsteinten Früchten, von Obstfruchtfleisch u.dgl., wobei auch tiefgefrorenes Obst oder Obstfruchtfleisch zur Anwendung gelangen kann. Je nach der verwendeten Obstart oder den verwendeten Obstarten sind Einfruchtmarmeladen, Mehrfruchtmarmeladen und gemischte Marmeladen herstellbar. Das Einkochen selbst erfolgt in einem in an sich bekannter Weise ausgebildeten Kochkessel.

In einem offenen Kochkessel werden unter Atmosphärendruck bei 60°C bis 80°C, vorzugsweise bei 70°C, 45 Kg Frucht mit 21 Kg kristallinem Zucker der eingesetzten Gesamtzuckermenge von 51 Kg und der jeweils erforderlichen Menge eines Schaumverhüters erhitzt, wobei zur Schaumverhütung Speiseöle und Speisefette sowie auch Mono- und Diglyceride von Speisefettsäuren der Kochung zugesetzt werden können. Nach Beendigung des Erhitzungsvorgangs wird ein Gemisch aus 4,5 Kg kristallinem Zucker und 0,3 bis 0,5 Kg Trockenpektin hinzugegeben, wobei als Pektin die bei der Konfitüren-Herstellung eingesetzten bekannten Pektine verwendet werden. Während des Erhitzungsprozesses werden entstehende Brüdendämpfe abgesogen. Die Mischung aus Frucht, einer Teilzuckermenge und dem Trockenpektin wird bis 90°C erhitzt.

Dem so erhaltenen Gemisch wird dann ein weiteres Gemisch aus 25 Kg kristallinem Zucker und 5 Kg Glykosesirup (80%ig) zugegeben und weiterhin auf 70°C bis 90°C erhitzt, wobei auch bei diesem Vorgang entstehende Brüdendämpfe abgesogen werden. Es besteht auch die Möglichkeit, mit einem Gebläse heiße oder kalte Luft zur Konzentrierung des Zuckers einzublasen.

Das so erhaltene Gesamtprodukt wird dann bei geschlossenem Kessel unter Druck auf 90°C bis 110°C, vorzugsweise auf 105°C erhitzt. Durch die Erhitzung unter Druck werden die Pektine gelöst. Im Anschluß hieran erfolgt dann eine Druckentspannung, jedoch unter Aufrechterhaltung einer Erhitzungstemperatur von etwa 95°C bis 100°. Hier erfolgt dann die Zugabe von 0,2 bis 0,3 Kg Citronensäure in kristalliner Form.

Das Gesamtprodukt wird dann bei Temperaturen zwischen 85°C und 95°C bei gleichzeitiger Einstellung des Zuckergehaltes -wie beschrieben (Luft)- weiterhin erhitzt. Es erfolgt dann eine Abkühlung des Fertigproduktes auf 80°C bis 75°C. Bei diesen Temperaturen erfolgt dann ein Abfüllen des Fertigproduktes in Gläser od.dgl. Während des Herstellungsvorganges wird über den Wasserdampf der jeweilige Zuckergehalt refraktometrisch ermittelt. Wenn die Trockensubstanz des Endproduktes vor der Druckstufe annähernd eingestellt ist, dann ist es nicht mehr erforderlich, daß das Produkt nach der Druckstufe erhitzt wird. Während der Abkühlung von 95°C auf 80°C bis 75°C dampft noch genügend Wasser ab, um die angestrebte Trockensubstanz zu erhalten. Die Pektine sind dabei so eingestellt, daß der Geliervorgang bei 75°C bis 85°C eintritt, der auch noch von der Zuckerkonzentration abhängt. Es ist daher vorteilhaft, wenn die Genußsäure erst nach der Entspannung zugesetzt wird, also bei 95°C bis 100°C. Nach weiterer Abkühlung tritt dann die Gelierung ein. Wird die Genußsäure jedoch bei partieller Zuckermengenzugabe in

4

Stufe c) zugesetzt, dann ist es erforderlich, daß die Dosierung des Gemisches bei einer Temperatur vorgenommen wird, die oberhalb der Geliertemperatur liegt.

Bei diesem Verfahren werden vor der Zugabe der zweiten Hauptmenge an kristallinem Zucker Trockenpektine in einer Mischung mit Zucker zugegeben. Lediglich die Glukose wird in Form einer Lösung zugegeben, und zwar als 80%ige Lösung.

Durch den Einsatz von kristallinem Zucker, Trockenpektinen und kristalliner Citronensäure wird dem Rohprodukt kein zusätzliches Wasser zugeführt, so daß auch keine großen Mengen an Wasser über die entstehenden Brüdendämpfe abgesogen werden müssen, wodurch der Vorteil gegeben ist, daß der Aromengehalt in der Frucht verbleibt, was auch noch unterstützt wird durch den hohen Zuckeranteil. Durch Erhitzen des Ausgangsproduktes in einer Druckstufe wird ein gutes Lösen der zugegebenen Pektine erreicht und eine Klumpenbildung vermieden. Das herzustellende Produkt geliert dabei sehr gut. Das erhaltene Endprodukt weist den jeweils vorgegebenen Zuckeranteil auf, der bei 60% bis 65% liegt. Der Aromenverlust entsteht bekannterweise nicht nur durch Wasserverdampfung, sondern erstreckt sich kontinuierlich über die gesamte Herstellungsdauer. Deswegen ist für die beschleunigte Wasserverdampfung bei niedriger Temperatur (70°C bis 85°C) das Einblasen von Luft oder einem inerten Gas auf die Oberfläche des Erhitzungsgutes ein wesentliches Merkmal des erfindungsgemäßen Verfahrens. Die Einstellung der Trockensubstanz des Endproduktes wird durch diese Maßnahme beschleunigt.

Während die Zugabe des kristallinen Zuckers nach dem vorangehend beschriebenen Verfahren in mehrfacher, d.h. im Prinzip zweifacher Aufteilung erfolgt, wobei der erste Teil der Zuckermenge mit der Frucht auf 60°C bis 80°C erhitzt wird, worauf sich dann die Pektinzugabe anschließt und dann erst der zweite Teil der Gesamtzuckermenge hinzugegeben wird, besteht nach einer weiteren Ausführungsform der Erfindung auch die Möglichkeit, die gesamte Zuckermenge auf einmal zuzugeben, wodurch ebenfalls eine vollständige Lösung der zugegebenen Pektine gewährleistet ist. Die hohe Zuckerkonzentration und das Erhitzen des Produktes unter Druck führt zu einer innigen Verbindung des Zuckers mit der Frucht, wodurch gleichzeitig erreicht wird, daß das Aroma während des Erhitzungsvorganges geschützt wird.

### Beispiel 2

Das erfindungsgemäße Verfahren wird anhand der einzelnen Verfahrensstufen nachstehend ergänzend erläutert.

```
Einsatzprodukte
Früchte          -  45 Anteile          = 45 Anteile
Zucker           -  51 Anteile          = 51 Anteile
Glukosesirup     -   5 Anteile  80%ig   =  4 Anteile
                                          100

Trockenpektin       0,3 Anteile  / 100
Citronensäure       0,3 Anteile  / 100
```

### Versuchsapparatur

Druckbehälter für offene und geschlossene Erhitzung
Heißluftgebläse
Temperiervorrichtung
Abbe-Refraktometer

### Herstellungsmethode

Mischung A:

45 Anteile Frucht werden mit 21 Anteilen Zucker gemischt und Entschäumungsmittel zugegeben. Die Mischung wird auf 70°C erhitzt.

Mischung B:

4,5 Anteile Zucker werden mit 0,3 Anteilen Trockenpektin pro 100 Anteilen Einsatzmenge vorgemischt und der auf 70°C erhitzten Mischung A zugegeben.
Mischung A + B werden auf 90°C erhitzt.

Mischung C:

25,5 Anteile Zucker werden mit 5 Anteilen Glukosesirup (80%ig) der Mischung A + B zugegeben. Beim Lösen des Zuckers fällt die Temperatur von 90°C auf 70°C.
Zur Einstellung der vorgegebenen Trockensubstanz (Refraktometerwert) wird auf die Oberfläche der Mischung A + B + C erhitzte Luft (etwa 80°C) geblasen. Die Temperatur der Mischung steigt dabei von 70°C auf etwa 85°C.
Der offene Behälter wird verschlossen und die konzentrierte Mischung A + B + C auf 105°C erhitzt.
Die Mischung wird kurzfristig bei 105°C gehalten.
Der Erhitzungsvorgang ist beendet und die konzentrierte Mischung A + B + C wird auf etwa 95°C abgekühlt. Der Druckbehälter wird geöffnet.

Säurezugabe

Der konzentrierten Mischung A + B + C werden etwa 0,3 Anteile Citronensäure pro 100 Anteile Einsatzmenge zur pH-Einstellung zugefügt. Das eingestellte Fertigprodukt wird auf Geliertemperatur zwischen 75°C und 80°C abgekühlt und abgefüllt.

Arbeitszeiten

- Ansatz etwa 2,25 Kg
Mischung A (1,47 Kg) wird in etwa 7 min auf 70°C erhitzt.
Mischung B (0,11 Kg) wird Mischung A zugegeben und die Mischung A + B in etwa 4 min auf 90°C erhitzt.
Mischung C (0,67 Kg) wird der Mischung A + B zugegeben. Der Einmischvorgang beträgt etwa 2 min. Die Temperatur der Mischung A + B + C sinkt dabei auf 70°C.
Mischung A + B + C wird mit Heißluft in etwa 1,5 bis 6 min auf vorgegebene Trockensubstanz eingestellt. Die Temperatur steigt dabei auf etwa 85°C.

Druckstufe:

Der Behälter wird verschlossen.
Die Mischung A + B + C erreicht in etwa 5 min unter Druck 100°C und in weiteren 2 min 105°C. Die Temperatur von 105°C wird 1 min gehalten.

Abkühlung:

Die unter Druck stehende Mischung A + B + C wird in etwa 3 min auf 95°C abgekühlt. Der Behälter wird geöffnet.

Säurezugabe:

Citronensäure wird der Mischung A + B + C zugegeben und in etwa 1 min homogen eingemischt.

In weiteren 2 min wird das Fertigprodukt auf 75°C bis 80°C abgekühlt und abgefüllt.

Gesamte Herstellungszeit etwa 30 min. Die Ausbeute beträgt etwa 2,1 Kg.

Während des Herstellungsverfahrens wurden die Wasserdampfverluste über den gesamten Verlauf bestimmt.

Ergebnis

Konfitürenherstellung mit hohem Aromagehalt. Konfitürenherstellung mit einem Minimum an Energie.

Vorteil gegenüber Kochung im offenen Behälter:

Lösung der Pektine trotz hohen Zuckergehaltes und daraus resultierender Aromaschutz.

Vorteil gegenüber der Vakuumkochung:

Einsatz von Trockenpektinen. Pektinlösungen erfordern bei der Herstellung bis zu 100% höheren Energiebedarf

Beispiel 3

In einem offenen Kochkessel wird einer vorgegebenen Frucht menge die gesamte eingesetzte Menge an kristallinem Zucker und ein Schaumverhüter eingesetzt. Diese Frucht-Zucker-Mischung wird bei 60° bis 80°C, vorzugsweise bei 70°C, erhitzt. Nach Beendigung des Erhitzungsvorganges wird das Trocken-Pektin hinzugegeben und die Mischung aus Frucht-Zucker und Trocken-Pektin auf 90°C erhitzt. Hierauf wird dann Glucosesirup hinzugegeben und die Frucht-Zucker-Mischung weiterhin bei 90°C erhitzt. Bei der Zugabe des Glucosesirups tritt praktisch keine Abkühlung ein. Dabei entstehende Brüdendämpfe werden abgesogen oder durch Einblasen von Luft auf die Oberfläche der Frucht-Zucker-Mischung bei 80° bis 90°C wird eine Konzentrierung vorgenommen. Das so erhaltene Gesamtprodukt wird hierauf bei geschlossenem Kessel auf 90° bis 110°C, vorzugsweise auf 105°C, erhitzt, wobei ein Brodeln oder Kochen des Gesamtproduktes vermieden wird. Der Kochraum wird dann durch Aufhebung des Druckes bei Aufrechterhaltung einer Erhitzungstemperatur von etwa 100o bis 95°C entspannt. Es wird dann Zitronensäure als Genußsäure hinzugegeben. Das so erhaltene Gesamtprodukt wird dann weiter im offenen Kochkessel bei Temperaturen zwischen 70° und 95°C bei gleichzeitiger Einstellung des Zuckergehaltes weiterhin erhitzt. Es erfolgt dann das Abkühlen des Endproduktes bei 75° bis 80°C. Das erhaltene Fertigprodukt wird in Gläser oder andersartig ausgebildete Behältnisse abgefüllt. Während des Herstellungsvorganges wird der jeweilige Zuckergehalt refraktometrisch ermittelt.

Zum Einsatz kommen bei diesem Verfahren 45 kg Frucht, 51 kg kristalliner Zucker und Entschäumer. An Trocken-Pektin werden 0,3 bis 0,5 kg eingesetzt.Die Menge an Zitronensäure beträgt etwa 0,2 bis 0,3 kg. Hinzugegeben werden ferner 5 kg Glucosesirup 80%ig.

Beispiel 4

In einem offenen Kochkessel wird eine vorgegebene Fruchtmenge zusammen mit einer Zucker-Trocken-Pektin-Mischung aus einem Teil Trocken-Pektin und fünfzehn Teilen Zucker auf 70°C erhitzt. Die Menge an eingesetztem kristallinem Zucker ist hier gegenüber der eingesetzten gesamten Menge an kristallinem Zucker äußerst gering; er sollte etwa 2% bis 10% betragen. Hierauf wird der offene Kochkessel verschlossen und das Frucht-Zucker-Trocken-Pektin-Gemisch etwa sieben Minuten auf 85° bis 90°C erhitzt. Bei diesem Vorgang entsteht auch ein Druck, der überwiegend aus erhitzter Luft entsteht. Die Trocken-Pektine werden bei dieser Methode unter Vermeidung von Wasserdampf erhitzt. Hieraufhin wird dann die restliche Menge an kristallinem Zucker, dem Glucosesirup zugegeben ist, zugesetzt, wobei die Temperatur in dem Kochkessel von etwa 85° C auf etwa 60° C absinkt. Durch Ansetzen von Vakuum wird über ein Heißluftgebläse abgedampft. Es wird hiernach eine ungekochte Konfitüre erhalten. Bei diesem Verfahren werden 45 kg Frucht (Trockensubstanz), 51 kg kristalliner Zucker, Entschäumer, 5 kg Glucosesirup (80%ig), 0,3 bis 0,5 kg Trocken-Pektin und 0,2 bis 0,3kg Zitronensäure als Genußsäure eingesetzt. In der ersten Stufe des Verfahrens werden etwa 1 kg der gesamten eingesetzten kristallinen Zuckermenge mit dem Trocken-Pektion vermischt und der gesamten vorgegebenen Fruchtmenge zugesetzt.

Beispiel 5

Um Trocken-Pektine unter 100° C bei Druck in zuckerhaltigen Lösungen in Lösung zu bringen, wird wie folgt vorgegangen:

| a) | 45% Frucht | 1000 g |
|---|---|---|
| b) | 21% kristal.Zucker | 466,5 g |
| c) | 4,5% kristal.Zucker | 100 g |
| d) | 0,3 Anteile Trocken-Pektin | 7 g |
| e) | 25,5% kristal.Zucker | 566,5 g |
| f) | 4% Glucosesirup | 89 g bis 111 g 80%. |

Die Komponenten a) und b) werden in einem offenen Kochkessel auf 70° C erhitzt. Daraufhin werden die Komponenten c) und d) eingerührt. Der Kochkessel wird verschlossen und Druckluft eingeleitet. Es wird ein Überdruck von 0,6 bis 0,8 bar erzeugt bei einer Temperatursteigerung auf 90° C. Im Bereich von 70° C bis 90° C wird der Überdruck vier Minuten lang gehalten, wobei der Druck nur während der Erhitzungszeit ausgeübt wurde. Nach Ablassen des Überdruckes wird der Kochkessel geöffnet und die Komponenten e) und f) hinzugegeben. Hierauf erfolgt dann die Einstellung der Trockensubstanz auf 62% mit einem Heißluftgebläse. Der gesamte Ansatz wird auf 95° C erhitzt und 0,3 Anteile (=7 g) Zitronensäure eingerührt und das Gesamtgemisch auf 75° C abgekühlt und in an sich bekannter Weise abgefüllt.

Nach diesem Verfahren wird eine sehr gute Gelierung des Produktes erreicht. Nach der Druckerhitzung konnte die Lösung der Pektine an der "Glätte" der Mischung erkannt werden. Überraschend war, daß auch Trocken-Pektine unter einer Temperatur von 100° C bei Druck in zuckerhaltigen Lösungen gelöst werden können. Auch bei höheren Zuckeranteilen ist eine Lösung der Trocken-Pektine möglich. Während bei dem vorangegangenen Beispiel 1133 g an kristallinem Zucker eingesetzt worden sind, besteht auch die Möglichkeit, von größeren Zuckermengen auszugehen, wobei es vorteilhaft ist, wenn die Komponenten b),c) und e) in einem Verhältnis von 21% : 4,5% : 25,5% zugegeben werden; jedoch auch veränderte Verhältniszahlen können zum Tragen kommen. Das Endprodukt weist einen hohen Aromengehalt auf.

Beispiel 6

Zur Lösung der Trocken-Pektine bei einem hohen Zuckeranteil wurde wie folgt vorgegangen:

| a) | 45% Frucht | 1000 g |
|---|---|---|
| b) | 46,5% kristal.Zucker | 1033 g |
| c) | 4,5% kristal.Zucker | 100 g |
| d) | 0,3 Anteile Trocken-Pektin | 7 g |
| e) | 4% Glucosesirup | 89 g bis 111 g 80% |

Die Komponenten a),b) und e) werden in einem offenen Kochkessel auf 70° C erhitzt. Danach werden die Komponenten c) und d) eingerührt. Der Kochkessel wird verschlossen und Druckluft eingeleitet. Es wird ein Überdruck von 0,6 bis 0,8 bar bei einer Temperatursteigerung auf etwa 95° C erzeugt. Im Temperaturbereich von 70° C bis 95° C wird der Überdruck fünf Minuten gehalten. Der Überdruck wird nur während der Erhitzungsphase aufrechterhalten. Danach wird der Überdruck aufgehoben, der Kochkessel geöffnet und die Einstellung der Trockensubstanz mit einem Heißluftgebläse vorgenommen. Unter weiterer Erhitzung sinkt die Temperatur während der Einstellzeit auf 90°C. Hieraufhin erfolgt die Säurezugabe in Form von 0,3 Anteilen (= 7 g) und die Abkühlung auf Geliertemperatur bis 75°C, woraufhin dann abgefüllt wird.

Trotz maximaler Zuckerzugabe wurde eine gute Gelierung erreicht. Das erhaltene Produkt ist blasenfrei bei gutem Glanz. Die Menge an eingesetztem Trocken-Pektin kann verringert werden, ohne daß die Gelierung beeinträchtigt wird. Die gute Löslichkeit der Trocken-Pektine bei vollem Zuckereinsatz ist allein durch die Druckanwendung bei den Herstellungstemperaturen unter 100°C hier erreicht. Das Endprodukt weist einen hohen Aromengehalt auf.

Beispiel 7

Um die Trocken-Pektine unter 100°C bei Erhitzung in einem geschlossenen Kochkessel in einem Zucker-Frucht-Gemisch, und zwar auch bei Zuckergehalten von etwa 60%, zu lösen, wird unter Verwendung der nachstehenden Anteile der einzelnen Komponenten wie folgt vorgegangen:

| a) | 45 % Frucht | 1000 g |
|----|-------------|--------|
| b) | 46,5% Zucker | 1033 g |
| e) | 4 % Glucosesirup | 89 g = 111 g 80% |
| c) | 4,5% Zucker | 100 g |
| d) | 0,3% Anteile Trocken-Pektin | 7 g |

Sämtliche Mischungsanteile (a + b + e und c + d) werden bei Raumtemperatur vermischt. Der als Druckbehälter ausgebildete Kochkessel wird verschlossen und die Mischungsanteile auf 95°C erhitzt. Nach Erreichen der Temperatur wird der Druck entspannt und der Kochkessel geöffnet. Die vorgegebene Trockensubstanz wird mit einem Heißluftgebläse eingestellt. Nach der Säurezugabe erfolgt die Abkühlung auf Geliertemperatur.

Druckbedingungen/Erhitzungsdauer

Versuch 1: Erhitzung und Einstellung des Überdruckes auf const. 0,3 bar.
Erhitzungsdauer: 12 min
Versuch 2: Erhitzung und Druckeinstellung wie vor.
Erhitzungsdauer: 20 min
Versuch 3: Erhitzung und Drucksteigerung auf 0,9 bar.
Erhitzungsdauer: 13 min
Lösung der Pektine bei Einstellung der Trockensubstanz auf 62,5%:
Versuch 1: Weiche Gelierung, Früchte schwimmen nicht auf.
Pektine nicht völlig gelöst.
Versuch 2: Feste Gelierung.
Versuch 3: Feste Gelierung

Versuchsergebnisse:

Trockenpektine werden während der Erhitzung bei Temperaturen unter 100°C im Druckbehälter auch bei hohen Zuckergehalten gelöst. Die Lösung der Pektine ist zeitabhängig. Durch Steigerung des Druckes kann die Lösung der Pektine beschleunigt werden.

Die Lösung der Pektine bedarf keiner äußeren Druckzufuhr durch Gase wie Stickstoff oder Preßluft.

Bei der Erhitzung der Zuckermischung entsteht ein Partialdruck des Wasserdampfes entsprechend der Zusammensetzung des Gemisches - hier ca. 40% - und der Erhitzung der Luft im Druckbehälter. Der resultierende Druck beträgt bei Erhitzung auf ca. 95°C etwa 0,9 bar Überdruck und ist überwiegend unabhängig von der Größe des Druckbehälters. Die Ergebnisse ohne Druckzufuhr beinhalten auch zwangsläufig die bessere Löslichkeit der Pektine mit Druckzufuhr

Die Lösung der Trocken-Pektine erfolgt hiernach bei Erhitzungstemperaturen unterhalb 100°C in Bereichen von 0,3 bar bis 0,9 bar oder sogar bis 1,3 bar, wobei im letzteren Fall eine Druckzufuhr erforderlich ist. Hinzu kommt, daß der Zuckeraustausch zwischen der Frucht und der Umgebung zeitlich beeinflußt wird, was bei stückiger Fruchtverteilung in der Masse zu kürzeren Herstellungszeiten führt.

**Ansprüche**

1. Verfahren zur Herstellung von pektin- und zuckerhaltigen Zubereitungen, insbesondere aus frischen oder frisch erhaltenen, entkernten oder entsteinten Früchten, Obstfruchtfleisch, Obstpulpe oder Obstmark, wie Marmelade, Konfitüre od.dgl., dadurch gekennzeichnet, daß unter Verwendung von Trocken-Pektin dieses in einem geschlossenen System durch Wärmezufuhr bei gleichzeitiger äußerer Druckluftzufuhr oder unter Ausschluß einer äußeren Druckluftzufuhr bei einem hohen oder niederen Fruchtanteil in Anwesenheit einer Menge an kristallinem Zucker oder unter Ausschluß einer Menge an kristallinem Zucker in Lösung bei Temperaturen unterhalb oder oberhalb von 100° C gebracht wird.

2 Verfahren nach Anspruch 1, dadurch gekennzeichnet, daß in einem offenen Kochkessel

a) einer vorgegebenen Fruchtmenge etwa 48% der gesamten eingesetzten Zuckermenge und ein Schaumverhüter zugegeben und die Frucht-Zucker-Mischung bei 60° C bis 80° C, vorzugsweise 70° C, erhitzt,

b) nach Beendigung des Erhitzungsvorganges der Frucht-Zucker-Mischung ein Gemisch aus einer geringen Menge, wie etwa 2% der gesamten zugesetzten Zuckermenge an kristallinem Zucker und Trocken-Pektin hinzugegeben und auf 90° C erhitzt,

c) dem Gemisch aus Stufe b) kristalliner Zucker in einer Menge von etwa 48% der gesamten eingesetzten Zuckermenge, dem Glucosesirup zugegeben ist, hinzugegeben und weiterhin bei 70° C die Frucht-Zucker-Mischung erhitzt, wobei gleichzeitig der entstehende Brüdendampf abgesogen oder durch Einblasen von Luft auf die Oberfläche der Frucht-Zucker-Mischung bei 80° C bis 90° C eine Konzentrierung vorgenommen wird,

d) das Gesamtprodukt hierauf bei geschlossenem Kessel auf 90° C bis 110° C, vorzugsweise auf 105° C, unter Vermeidung eines Brodelns oder Kochens des Gesamtproduktes erhitzt,

e) der Kochraum dann durch Aufhebung des Druckes bei Aufrechterhaltung einer Erhitzungstemperatur von etwa 100° C bis 95° C entspannt,

f) das Gesamtprodukt bei Temperaturen zwischen 70° C und 95° C bei gleichzeitiger Einstellung des Zuckergehaltes weiterhin im offenen Kochkessel erhitzt, danach

g) das Endprodukt bei 75° C bis 80° C abgekühlt und in Gläser od. dgl. abgefüllt wird,

wobei Citronensäure als Genußsäure in Stufe c) oder in Stufe e) zugegeben und wobei während des Herstellungsvorganges der jeweilige Zuckergehalt refraktometrisch ermittelt wird.

3. Verfahren nach Anspruch 1 und 2, dadurch gekennzeichnet, daß in der
Stufe a) 45 kg Frucht
25 kg kristalliner Zucker und Entschäumer, in der
Stufe b) 1 kg kristalliner Zucker
0,3 bis 0,5 kg Trocken-Pektin in der
Stufe c) 25 kg kristalliner Zucker
5 kg Glukosesirup (80%ig)
und vorzugsweise nach der
Stufe d) 0,2 bis 0,3 kg Citronensäure
eingesetzt werden.

4. Verfahren nach Anspruch 1, dadurch gekennzeichnet, daß in einem offenen Kochkessel

a) einer vorgegebenen Fruchtmenge die gesamte eingesetzte Menge an kristallinem Zucker und ein Schaumverhüter zugesetzt und die Mischung bei 60° C bis 80° C, vorzugsweise 70° C, erhitzt,

b) nach Beendigung des Erhitzungsvorganges das Trocken-Pektin hinzugegeben und auf 90° C erhitzt, hierauf Glucosesirup hinzugegeben und weiterhin bei 70° C die Frucht-Zucker-Mischung erhitzt, wobei gleichzeitig der entstehende Brüdendampf abgesogen oder durch Einblasen von Luft auf die Oberfläche der Frucht-Zucker-Mischung bei 80° C bis 90° C eine Konzentrierung vorgenommen wird,

c) das Gesamtprodukt hierauf bei geschlossenem Kessel auf 90° C bis 110° C, vorzugsweise auf 105° C, unter Vermeidung eines Brodelns oder Kochens des Gesamtproduktes erhitzt,

d) der Kochraum dann durch Aufhebung des Druckes bei Aufrechterhaltung einer Erhitzungstemperatur von etwa 100° C bis 95° C entspannt und Citronensäure als Genußsäure hinzugegeben,

e) das Gesamtprodukt im offenen Kochkessel bei Temperaturen zwischen 70° C und 95° C bei gleichzeitiger Einstellung des Zuckergehaltes weiterhin erhitzt, danach

f) das Endprodukt bei 75° C bis 80° C abgekühlt und das Fertigprodukt in Gläser od.dgl. abgefüllt wird,

wobei während des Herstellungsvorganges der jeweilige Zuckergehalt refraktometrisch ermittelt wird.

5. Verfahren nach Anspruch 1 und 4, dadurch gekennzeichnet, daß in der
Stufe a) 45 kg Frucht
51 kg kristalliner Zucker und 5 kg
Glucosesirup 80%ig sowie Entschäumer in der

Stufe b) 0,3 bis 0,5 kg Trocken-Pektin und nach der

Stufe c) 0,2 bis 0,3 kg Citronensäure

zugesetzt werden.

6. Verfahren nach Anspruch 1, dadurch gekennzeichnet, daß

a) in einem offenen Kochkessel eine vorgegebene Fruchtmenge zusammen mit einer Zucker-Trocken-Pektin-Mischung aus einem Teil kristallinem Zucker und fünfzehn Teilen Trocken-Pektin, wobei die Menge an eingesetztem kristallinen Zucker etwa 2% bis 10% der gesamten eingesetzten Zuckermenge entspricht, auf 70°C erhitzt,

b) der offene Kochkessel hierauf geschlossen oder sofort nach der Pektinzugabe verschlossen und das Zucker-Trocken-Pektin-Frucht-Gemisch etwa sieben Minuten auf 85° bis 90°C erhitzt,

c) hiernach die restliche Menge an kristallinem Zucker dem Glucosesirup zugegeben ist, wobei die Temperatur in dem Kochkessel von 85° auf 60°C absinkt,

d) durch Ansetzen von Vakuum über ein Heißluftgebläse abgedampft wird,

wobei in der

Stufe a) ein Schaumverhüter und in der Stufe c) Zitronensäure als Genußsäure hinzugegeben werden, und daß während des Herstellungsvorganges der jeweilige Zuckergehalt refraktometrisch ermittelt wird.

7. Verfahren nach Anspruch 1 und 6,daudrch gekennzeichnet, daß in der

Stufe a) 45 kg Frucht

1 kg kristalliner Zucker Entschäumer

0,3 bis 0,5 kg Trocken-Pektin, in der

Stufe c) 50 kg kristalliner Zucker

5 kg Glucosesirup (80%ig)

0,2 bis 0,3 kg Zitronensäure

eingesetzt werden.

8. Verfahren nach einem der vorangegangenen Ansprüche 1 bis 7, dadurch gekennzeichnet, daß anstelle eines Lösens der Trocken-Pektine bei einem hohen Zuckergehalt bei einer oberhalb 100°C liegenden Temperatur im geschlossenen Kochkessel unter Druck das Lösen der Trocken-Pektine bei einer unterhalb der Temperatur von 100°C liegenden Temperatur insbesondere vermittels eines durch Zuleiten eines neutralen Gases, wie z.B. Kohlendioxid-Gas, erzeugten zusätzlichen Druckes vorgenommen wird.

9. Verfahren nach Anspruch 8, dadurch gekennzeichnet, daß in einem offenen Kochkessel ein Gemisch aus 45% Frucht und 21% kristallinem Zucker auf 70°C kurzzeitig erhitzt, hierauf ein Gemisch aus 4,5% kristallinem Zucker und 0,3 Anteilen Trocken-Pektin eingerührt, der Kochkessel verschlossen und Druckluft in den Innenraum des Kochkessels bis zu einem Überdruck von 0,6 bis 0,8 bar bei gleichzeitiger Temperatursteigerung auf 90°C eingeleitet, das Gesamtgemisch bei Überdruck bei 70°C bis 90°C vier Minuten gehalten wird, wobei der Überdruck nur während der Erhitzung aufrechterhal ten wird, danach der Überdruck aufgehoben, der Kochkessel geöffnet, dann 25,5% kristalliner Zucker und 4% Glucosesirup hinzugegeben wird, wobei die Einstellung der Trockensubstanz auf 62% mittels eines Heißluftgebläses erfolgt, dann der gesamte Ansatz auf 95°C erhitzt, hierauf 7 g Zitronensäure eingerührt und auf 75°C abgekühlt und in Gläser od. dgl. abgefüllt wird.

10. Verfahren nach Anspruch 8, dadurch gekennzeichnet, daß in einem offenen Kochkessel ein Gemisch aus 45% Frucht, 46,5% kristallinem Zucker und 4% Glucosesirup auf 70°C erhitzt, hierauf ein Gemisch aus 4,5% kristallinem Zucker und 0,3 Anteile Trocken-Pektin eingerührt, der Kochkessel verschlossen und Druckluft in den Innenraum des Kochkessels bis zu einem Überdruck von 0,6 bis 0,8 bar bei gleichzeitiger Temperatursteigerung auf etwa 95°C fünf Minuten gehalten wird, wobei der Überdruck nur während der Erhitzung aufrechterhalten wird, danach der Überdruck aufgehoben, der Kochkessel geöffnet und die Einstellung der Trockensubstanz mit einem Heißluftgebläse vorgenommen wird, wobei bei weiterer Erhitzung die Temperatur während der Einstellung auf 90°C sinkt, worauf 7 g Zitronensäure hinzugegeben, auf Geliertemperatur bis 75°C abgekühlt und in Gläser od. dgl. abgefüllt wird

11. Verfahren nach Anspruch 1 dadurch gekennzeichnet, daß in einem geschlossenen Kochkessel ein Gemisch aus 45% Frucht und 21% kristallinem Zucker auf 70°C kurzzeitig erhitzt, hierauf ein Gemisch aus 4,5% kristallinem Zucker und 0,3 Anteilen Trocken-Pektin eingerührt, auf 90°C erhitzt, das Gesamtgemisch bei 70°C bis 90°C vier Minuten gehalten wird, danach der Kochkessel geöffnet, dann 25,5% kristalliner Zucker und 4% Glucosesirup hinzugegeben wird, wobei die Einstellung der Trockensubstanz auf 62% mittels eines Heißluftgebläses erfolgt, dann der gesamte Ansatz auf 95°C erhitzt, hierauf 7 g Zitronensäure eingerührt und auf 75°C abgekühlt und in Gläser od.dgl. abgefüllt wird.

12. Verfahren nach Anspruch 1, dadurch gekennzeichnet, daß in einem geschlossenen Kochkessel ein Gemisch aus 45% Frucht, 46,5% kristallinem Zucker und 4% Glucosesirup auf 70°C erhitzt, hierauf ein Gemisch aus 4,5% kristallinem Zucker und 0,3 Anteile Trocken-Pektin eingerührt, auf etwa 95°C erhitzt und bei dieser Temperatur etwa fünf Minuten gehalten wird, danach der Kochkessel geöffnet und die Einstellung der Trockensubstanz mit einem Heißluftgebläse vorgenommen wird, wobei bei weiterer Erhitzung die Temperatur während der Einstellung auf 90° C sinkt, worauf 7 g Zitronensäure hinzugegeben, auf Geliertemperatur bis 75° C abgekühlt und in Gläser od.dgl. abgefüllt wird.